# EUROPEAN PATENT APPLICATION

(11) **EP 3 840 235 A1**
(43) Date of publication of application: **23.06.2021**
(21) Application number: 20208372.1
(22) Date of filing: 18.11.2020
(51) Int. Cl.: H04B 1/38, F24D 19/10

(54) **HOT WATER SUPPLY SYSTEM AND REMOTE CONTROLLER OF HOT WATER SUPPLY SYSTEM**

(30) Priority: 16.12.2019 JP 2019226096; 11.06.2020 JP 2020101306
(71) Applicant: Panasonic Intellectual Property Management Co., Ltd., Osaka-shi, Osaka 540-6207 (JP)
(72) Inventor: MORINO, Naoki, Osaka-shi,, Osaka 540-6207 (JP); SHIMOBOU, Kazuya, Osaka-shi,, Osaka 540-6207 (JP); UCHITANI, Kazuo, Osaka-shi,, Osaka 540-6207 (JP)
(74) Representative: Eisenführ Speiser

(57) **Abstract**

[Object] It is an object of the present invention to provide a hot water supply system and a remote controller of the hot water supply system having a wireless LAN module and excellent usability.

[Solving Means] A remote controller of a hot water supply system includes an outer case (6), a wireless LAN module (4) placed in the outer case (6), an antenna (5) of the wireless LAN module placed in the outer case (6), and a flat plate-like control board (3) placed in the outer case (6), and the antenna (5) of the wireless LAN module is placed such that the antenna (5) is not opposed to a flat surface portion of the control board (3). Output of electric waves used by a wireless LAN is small, and electric waves are easily attenuated by an obstacle, but if the antenna (5) of the wireless LAN module (4) is placed such that the antenna (5) is not superposed on the control board (3) in all directions, it is possible to restrain electric waves used by the wireless LAN from being attenuated by the control board (metal).

## Description

### [TECHNICAL FIELD]

The present invention relates to a remote controller of a hot water supply system.

### [BACKGROUND TECHNIQUE]

In a conventional remote controller of a hot water supply system of this kind in which a wireless LAN module is mounted, search stopping means is provided so that noise caused by searching action of a wireless LAN router is not generated in a state where an intercom function capable of calling between a plurality of remote controllers is operated (see patent document 1 for example).

### [PRIOR ART DOCUMENT]

### [PATENT DOCUMENT]

[Patent Document 1] Japanese Patent Application Laid-open No.2017-92721

### [SUMMARY OF THE INVENTION]

### [PROBLEM TO BE SOLVED BY THE INVENTION]

However, the conventional configuration has a problem that since the searching function of the wireless LAN router is stopped in a state where the intercom function is operated, usability of a hot water supply system having the wireless LAN module mounted in the remote controller is deteriorated.

The present invention is accomplished to solve the conventional problem, and it is an object of the invention to provide a hot water supply system and a remote controller of the hot water supply system having a wireless LAN module and excellent usability.

### [MEANS FOR SOLVING THE PROBLEM]

To solve the conventional problem, the present invention provides a remote controller of a hot water supply system including an outer case, a wireless LAN module placed in the outer case, an antenna of the wireless LAN module placed in the outer case, and a flat plate-like control board placed in the outer case, wherein the antenna of the wireless LAN module is placed such that the antenna is not opposed to a flat surface portion of the control board.

According to this, output of electric waves used by the wireless LAN is small and the electric waves are easily attenuated by an obstacle, but if the antenna of the wireless LAN module is placed such that the antenna is not opposed to the flat surface portion of the control board, it is possible to restrain the electric waves used by the wireless LAN from being attenuated by the flat surface portion of the control board (metal) having a large area.

### [EFFECT OF THE INVENTION]

According to the present invention, it is possible to provide a hot water supply system and a remote controller of the hot water supply system having a wireless LAN module and excellent usability.

### [BRIEF DESCRIPTION OF THE DRAWINGS]

Fig. 1 is a configuration diagram of a hot water supply system according to an embodiment of the present invention;
Fig. 2(a) is a front surface diagram of a of a bath remote controller according to the embodiment, and Fig. 2(b) is a front surface diagram of a kitchen remote controller; and
Fig. 3 is an inside rear surface diagram of the kitchen remote controller according to the embodiment.

### [MODE FOR CARRYING OUT THE INVENTION]

A first invention provides a remote controller of a hot water supply system including an outer case, a wireless LAN module placed in the outer case, an antenna of the wireless LAN module placed in the outer case, and a flat plate-like control board placed in the outer case, wherein the antenna of the wireless LAN module is placed such that the antenna is not opposed to a flat surface portion of the control board.

According to this, output of electric waves used by the wireless LAN is small and the electric waves are easily attenuated by an obstacle. However, if the antenna is placed such that it is not superposed on the control board in all directions, it is possible to restrain electric waves used by the wireless LAN from being attenuated by the control board (metal) having a large area.

According to a second invention, especially in the first invention, the outer case is made of resin, and the antenna of the wireless LAN module and an inner wall of the outer case are separated from each other by a predetermined distance in the outer case.

According to this, if a distance between high frequency electric waves used by the wireless LAN and an obstacle such as resin is short, antenna characteristics are affected by its slight floating capacitance, and efficiency of output of the electric waves is deteriorated. However, the antenna of the wireless LAN module and the inner wall of the outer case are separated from each other by the predetermined distance. Therefore, the characteristics of the antenna are not affected, and it is possible to restrain the deterioration of the output of the electric waves caused by the obstacle.

According to a third invention, especially in the first or second invention, the remote controller of the hot water supply system is composed of a kitchen remote controller and a bath remote controller, and the wireless LAN module is placed in the kitchen remote controller.

According to this, since the wireless LAN router is placed in a room in many cases, if the wireless LAN module is placed in the kitchen remote controller rather than in the bath remote controller, it is possible to restrain attenuation of electric waves used by the wireless LAN caused by an obstacle more effectively.

A fourth invention provides a hot water supply system, wherein operation of the hot water supply system is controlled by the remote controller of the hot water supply system especially according to any one of the first to third inventions.

According to this, since the operation is controlled by the remote controller of the hot water supply system having the wireless LAN module, it is possible to provide the hot water supply system having excellent usability.

An embodiment of the present invention will be described below with reference to the drawings. The invention is not limited to the embodiment.

### (Embodiment)

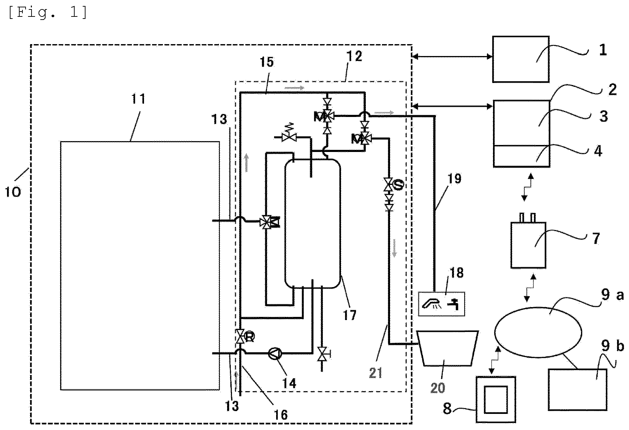

Fig. 1 is a configuration diagram of a heat pump hot water supply system according to an embodiment of the present invention.

First, action and function of the heat pump hot water supply system will be described using Fig. 1.

The heat pump hot water supply system 10 includes a heat pump heat source device 11 and a tank unit 12. The heat pump heat source device 11 heats tap water by water-refrigerant heat exchange. The tank unit 12 is heated by the heat pump heat source device 11, and high temperature water conveyed through a pipe 13 is stored in the tank unit 12. The tank unit 12 mixes the stored high temperature water and tap water, and supplies hot water whose temperature is adjusted to predetermined temperature by the mixing.

The heat pump heat source device 11 and the tank unit 12 compose the heat pump hot water supply system 10.

The tank unit 12 has a hot water supply cycle 15.

The hot water supply cycle 15 is composed of a hot water tank 17 for storing high temperature water produced by the heat pump heat source device 11, a water-entering pipe 16 for sending tap water into the hot water tank 17, a hot water supply pipe 19 for supplying high temperature water from the hot water tank 17 to a hot water supply terminal 18 of a faucet or a shower, a bath hot water supply pipe 21 for supplying predetermined temperature hot water to the bathtub 20, and a circulation pump 14.

To heat low temperature water in the hot water tank 17 and produce high temperature water, the circulation pump 14 conveys low temperature water in the hot water tank 17 to the heat pump heat source device 11.

The above described operation action of the heat pump hot water supply system 10 is controlled by a bath remote controller 1 and a kitchen remote controller 2.

A control board 3 and a wireless LAN module 4 are placed in the kitchen remote controller 2. The wireless LAN module 4 communicates with a wireless LAN router 7 placed in a living room or the like, and the wireless LAN module 4 is connected to a cloud server 9b through the Internet 9a.

Operation of the heat pump heat source device 11, hot water filling operation of the bathtub 20, and checking of operation information of the heat pump hot water supply system 10 can be carried out using remote communication means 8 such as a smartphone. A user can access to the cloud server 9b through the Internet 9a using the remote communication means 8. Instructions of the user are received by the wireless LAN module 4 from the cloud server 9b through the Internet 9a and the wireless LAN router 7.

The user checks the operation information and failure history of the heat pump hot water supply system 10 using the remote communication means 8, and can make a remote diagnosis of a failure portion. Since it becomes possible to swiftly repair by this remote diagnosis, it is possible to provide a hot water supply system and a remote controller of the hot water supply system having excellent usability.

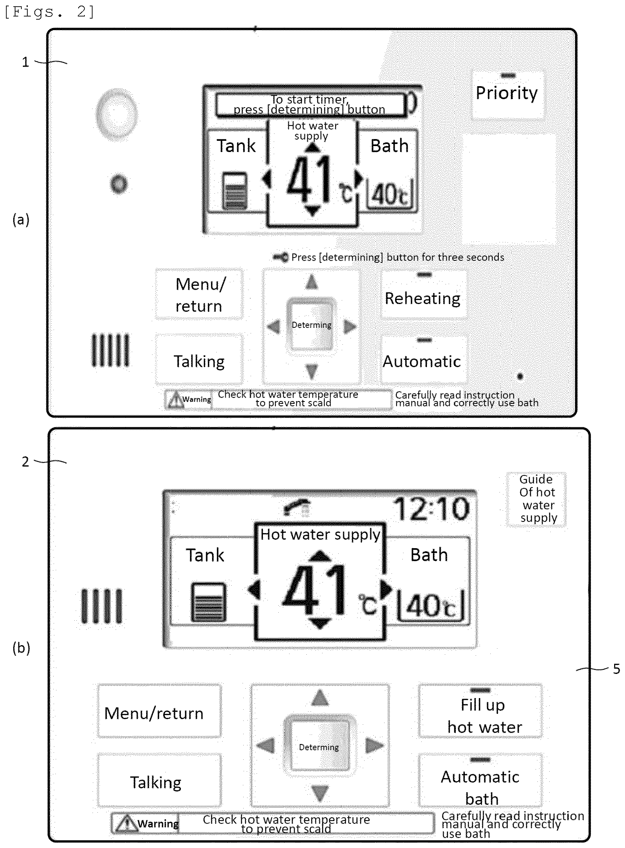

Fig. 2(a) is a front surface diagram of a of the bath remote controller 1 according to the embodiment, and Fig. 2(b) is a front surface diagram of the kitchen remote controller 2 of the embodiment.

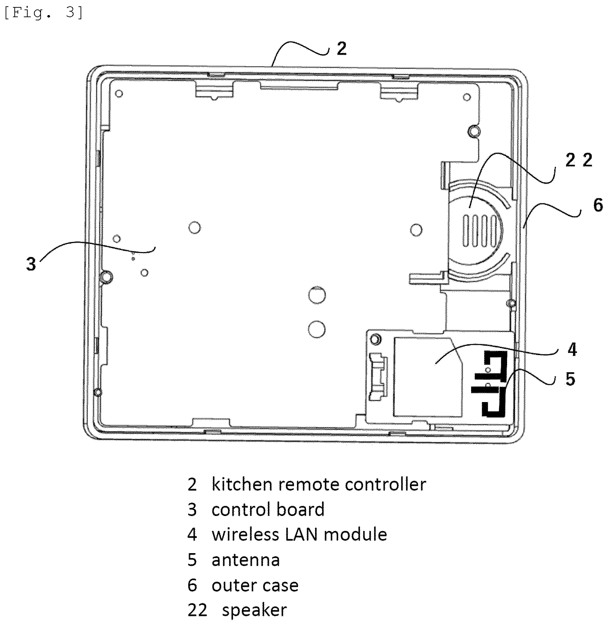

Fig. 3 is an inside rear surface diagram of the kitchen remote controller according to the embodiment.

Configuration of the remote controller of the hot water supply system according to the embodiment will be described below using Fig. 3.

The kitchen remote controller 2 includes, in an outer case 6, the wireless LAN module 4, the flat plate-like control board 3 and an antenna 5 of the wireless LAN module 4. The antenna 5 of the wireless LAN module 4 is placed such that the antenna 5 is not opposed to a front surface and a back surface of a flat surface portion of the control board 3 having a large area. The control board 3 is not placed on one of ends of the antenna 5 in a longitudinal direction, one of ends of the antenna 5 in a vertical direction and one of ends of the antenna 5 in a lateral direction. A speaker 22 is placed on an upper side of the antenna 5.

One of ends of the antenna 5 in the lateral direction (side where control board 3 is not placed) is opposed to an inner wall of the outer case 6. The outer case 6 is made of resin into a box shape, and the wireless LAN module 4 is placed in the outer case 6 such that the antenna 5 is separated from the inner wall of the outer case 6 by a predetermined distance. Electric waves from the antenna 5 permeate the resin outer case 6 and are radiated.

Output of electric waves used by the wireless LAN is small, and the electric waves are easily attenuated by an obstacle. However, in the remote controller of the hot water supply system of the embodiment, the antenna 5 of the wireless LAN module 4 is placed such that the antenna 5 is not opposed to the front surface and the back surface of the flat surface portion of the flat plate-like control board 3 as described above. According to this, it is possible to restrain electric waves used by the wireless LAN from being attenuated by the control board (metal). The antenna 5 is placed on a corner of the box-like resin outer case 6, the antenna 5 and the speaker 22 are placed in parallel on a vertical plane, and the control board 3 is placed on the antenna 5 and the speaker 22 in parallel on the vertical plane. According to this, inside of the outer case 6 can effectively be utilized without creating a space, and it is also possible to restrain electric waves used by the wireless LAN from being attenuated by the control board (metal).

The output of the electric waves used by the wireless LAN is small, and the electric waves are easily attenuated by an obstacle, but since the antenna 5 of the wireless LAN module 4 and the inner wall of the outer case 6 are separated from each other by the predetermined distance in the outer case, characteristics of the antenna 5 are not affected, and it is possible to restrain the output of the electric waves from being deteriorated by an obstacle.

The heat pump hot water supply system 10 includes the kitchen remote controller 2 and the bath remote controller 1, and the wireless LAN module 4 is placed in the kitchen remote controller 2. Since the wireless LAN router 7 is placed in a room in many cases, if the wireless LAN module 4 is placed in the kitchen remote controller 2 rather than the bath remote controller 1, it is possible to more effectively restrain electric waves used by the wireless LAN from being attenuated by an obstacle.

### [INDUSTRIAL APPLICABILITY]

As described above, the remote controller of the hot water supply system of the present invention includes the wireless LAN module, and the remote controller has excellent usability. Therefore, the remote controller can be applied to a hot water supply system which uses electricity or gas as a heat source.

### [EXPLANATION OF SYMBOLS]

- 1: bath remote controller
- 2: kitchen remote controller
- 3: control board
- 4: wireless LAN module
- 5: antenna
- 6: outer case
- 7: wireless LAN router
- 8: remote communication means
- 9a: the Internet
- 9b: cloud server
- 10: heat pump hot water supply system
- 11: heat pump heat source device
- 12: tank unit
- 13: pipe
- 14: circulation pump
- 15: hot water supply cycle
- 16: water-entering pipe
- 17: hot water tank
- 18: hot water supply terminal
- 19: hot water supply pipe
- 20: bathtub
- 21: bath hot water supply pipe
- 22: speaker

## Claims

1. A remote controller of a hot water supply system comprising
an outer case (6),
a wireless LAN module (4) placed in the outer case (6),
an antenna (5) of the wireless LAN module (4) placed in the outer case (6), and
a flat plate-like control board (3) placed in the outer case (6), wherein
the antenna (5) of the wireless LAN module (4) is placed such that the antenna (5) is not opposed to a flat surface portion of the control board (3).

2. The remote controller of the hot water supply system according to claim 1, wherein the outer case (6) is made of resin, and the antenna (5) of the wireless LAN module (4) and an inner wall of the outer case (6) are separated from each other by a predetermined distance in the outer case (6) .

3. The remote controller of the hot water supply system according to claim 1 or 2, wherein the remote controller of the hot water supply system is composed of a kitchen remote controller (2) and a bath remote controller (1), and the wireless LAN module (4) is placed in the kitchen remote controller (2).

4. A hot water supply system, wherein operation of the hot water supply system is controlled by the remote controller of the hot water supply system according to any one of claims 1 to 3.
